## Europäisches Patentamt
## European Patent Office
## Office européen des brevets

(19)

(11) Veröffentlichungsnummer: **0 129 760**
**B1**

(12) # EUROPÄISCHE PATENTSCHRIFT

(45) Veröffentlichungstag der Patentschrift:
04.11.87

(51) Int. Cl.⁴: **G 11 B 7/08**

(21) Anmeldenummer: **84106633.5**

(22) Anmeldetag: **09.06.84**

(54) Spurfolgesystem mit einem optischen Abtaster für ein Audio- oder Video-Plattenwiedergabegerät.

(30) Priorität: **25.06.83 DE 3323007**

(43) Veröffentlichungstag der Anmeldung:
**02.01.85 Patentblatt 85/1**

(45) Bekanntmachung des Hinweises auf die Patenterteilung:
**04.11.87 Patentblatt 87/45**

(84) Benannte Vertragsstaaten:
**AT BE CH FR GB IT LI LU NL SE**

(56) Entgegenhaltungen:
**EP-A-0 073 066**
**EP-A-0 089 736**
**EP-A-0 096 881**
**DE-B-2 320 477**

**PHILIPS TECHNICAL REVIEW, vol. 40, 1982, no. 6, Eindhoven, Philips Research Laboratories. M. G. CARASSO et al.: "The compact Disc Digital Audio system", Seiten 151-156**

(73) Patentinhaber: **Deutsche Thomson- Brandt GmbH, Hermann- Schwer- Strasse 3 Postfach 2060, D-7730 Villingen- Schwenningen (DE)**

(72) Erfinder: **Kühn, Hans- Robert, Haydnweg 9, D-7724 St. Georgen (DE)**

EP 0 129 760 B1

## Beschreibung

Die vorliegende Erfindung betrifft ein radial wirkendes Spurfolgesystem mit einem optischen Abtaster für ein Audio- oder Video-Plattenwiedergabegerät.

Es ist bekannt aus der DE-PS-23 20 477, das für die radiale Nachsteuerung erforderliche Radial-Fehlersignal über zwei in tangentialer Richtung zur Spur angeordnete zusätzliche Lichtflecke (Hilfs-Lichtflecke) zu erzeugen. Sie liegen in gleichem Abstand zum Haupt-Lichtfleck, inre Mittelpunkte auf einer Linie und sie sind in radialer Richtung so zum Zentrum der Spur entgegengesetzt versetzt, daß bei einer radialen Abweichung der Spur unter den Lichtflecken, entgegengesetzte Wirkungen in den beiden Hilfs-Lichtflecken entstehen. Die reflektierten Lichtintensitäten der beiden Hilfs-Lichtflecken werden getrennt von einander und getrennt von der reflektierten Lichtintensität des Haupt-Lichtfleckes über entsprechende Detektionsmittel ausgelesen.

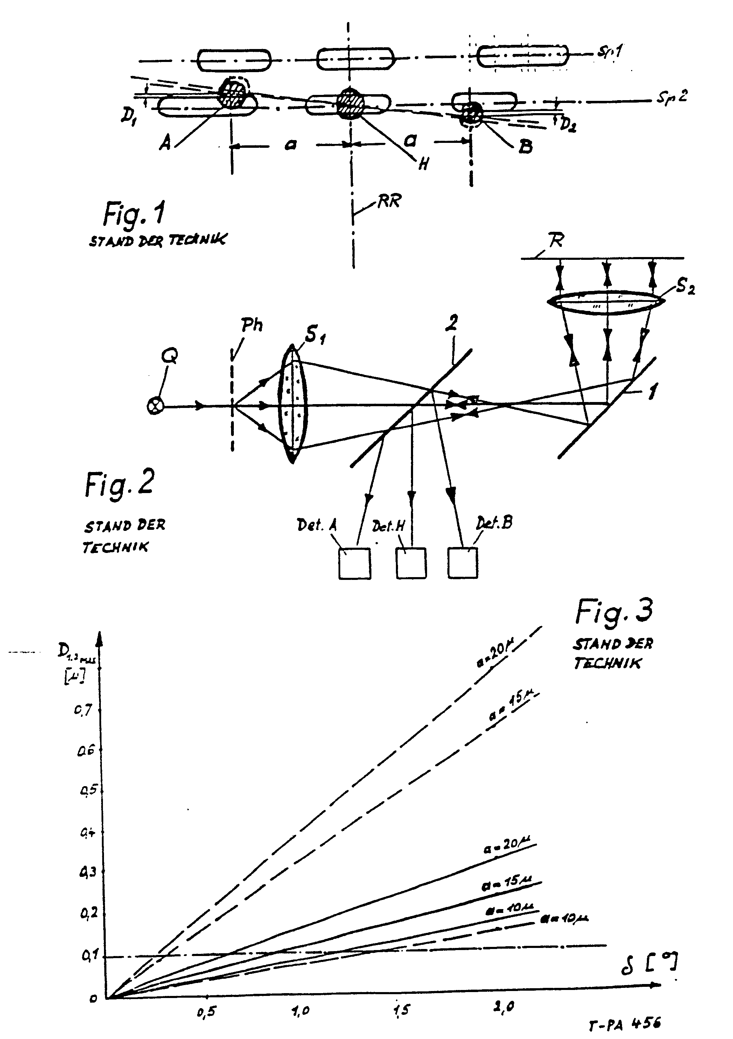

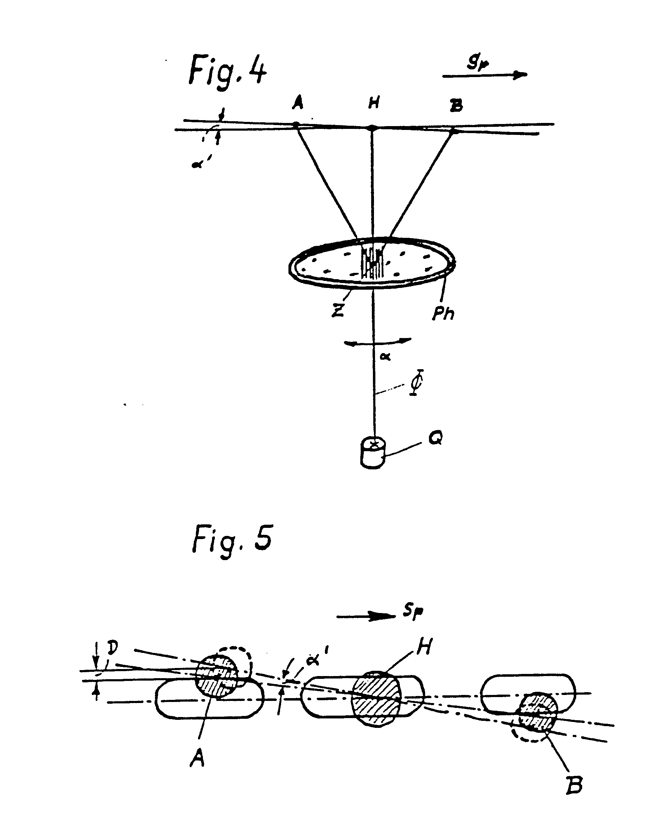

Aus der DE-OS-32 27 654 ist aus der Zusammenfassung und den Figuren 1 und 4 mit den zugehörigen Beschreibungsteilen bekannt, ein ebenfalls einstellbares "Phasenraster" bzw. Beugungsgitter zu verwenden. Dabei werden drei auf einer Linie liegende Abtastflecken (LB$_1$, LB und LB$_2$ der Figur 1) erzeugt. Dabei dient der mittlere Fleck (LB) ebenfalls dem Informationsauslesen und der Fokussierungssteuerung und die zwei anderen Abtastflecken (LB$_1$, LB$_2$) der Spursteuerung.

Es ist weiterhin aus eingangs genanntem Patent bekannt, die insgesamt drei Lichtflecken mit einem Phasenraster (Beugungsgitter) zu erzeugen, das zum Zwecke der einmaligen Justierung gemäß bekannter Geräte in einer zum Lichtstrahlbündel senkrechten Ebene um einen Drehpunkt, der nicht mit dem Mittelpunkt des Phasenrasters übereinstimmt, vielmehr außerhalb des Phasenrasters liegt, einstellbar um einen kleinen Winkel angeordnet ist. Eine erforderliche Drehung wird mechanisch über einen Hebel mittels einer von außerhalb des Gerätes zugänglichen Stellschraube vorgenommen.

Die EP-OS-00 73 066 zeigt auch eine ähnliche Justierbarkeit. Hier ist bei einem nach dem mehrfachen Drei-Strahl-Prinzip aufgebauten optischen Abtaster davon die Rede (Figur 5 und dazugehörige Beschreibung), durch eine Rotation der Seugungsgitter-Platten) (4a, 4b) eine bestimmte gewünschte Winkeleinstellung der beiden Abtastflecken (6a, 6b, 6c$_2$ und 6a$_2$, 6b, 6c) zu erreichen. Dadurch sollen die Winkel ($\Theta_1$ und $\Theta_2$) der beiden Drei-Strahl-Systeme justiert werden. Auch der Winkel zwischen der Linie, auf der jeweils die drei Lichtflecken liegen, und der Tangente an der Spurabtaststelle ist einstellbar und zwar während der Abtastung.

Alle bisher bekannt gewordenen optischen Abtaster nach dem Drei-Strahl-Prinzip weisen zusammengefaßt folgende Nachteile auf:

1. Sie lassen sich dort nicht verwenden, wo aufgrund des Konstruktionsprinzips nur eine radiale Steuerung mittels eines Schwenkarmes vorgenommen wird, da der hiermit verbundene Tangentenfehlwinkel in Abhängigkeit vom gerade abgetasteten Spur-Radius eine derartige Verschiebung der Lage der Hilfslichtflecken zur Spur zur Folge hat, daß eine Spurhaltung nicht mehr zu erreichen ist;

2. Bei Radial-Linear-Systemen mit Grob- und Feinspurnachsteuerung ergibt sich die Schwierigkeit, daß bereits bei sehr geringen Abweichungen in der Führung der radialen Nachstellung aufgrund der unterschiedlichen Krümmung der Spur abhängig vom Abtastradius eine ungünstige radiale Verschiebung der beiden Hilfslichtflecken zur Spur eintritt. Hierdurch wird die Spurhaltung mangelhaft oder es kann Spurverlust eintreten.

Aus der "Philips technical review" 40/82, Seite 154 ist es weiterhin bekannt, zur Verbesserung der Nachführeigenschaften an das radiale Spur-Nachfolgesystem ein radial wirkendes Kontrollsignal zu legen, das z. B. bei einer Frequenz von 600 Hz ein radiales Hin- und Herschwingen der Lichtflecken mit einer Amplitude von 0,05 μm bewirkt. Die radiale Schwingbewegung des Abtasters führt zu einer Überlagerung der Lichtintensitäten auf den Detektionselementen. Durch entsprechende Summenbildung, Ausfiltern und Vergleich mit dem ursprünglichen Kontrollsignal kann auf eine eventuell vorliegende Asymmetrie des optischen Systems geschlossen und dadurch Fehler im Radial-Fehlersignal ermittelt und vermieden werden. Eine solche Einrichtung zeigt jedoch den Nachteil, daß das Kontrollsignal den abgetasteten Informationssignalen überlagert ist, d.h. im Frequenzspektrum des Informationsgehaltes liegt. Es ist deshalb auch nicht möglich, eine höhere Frequenz für das Kontrollsignal zu verwenden, da die Energieanteile der Informationssignale zunächst mit zunehmender Frequenz noch großer werden. Es wäre aber durchaus wünschwenswert eine höhere Frequenz als z. B. 500 oder 600 Hz zu verwenden, da erst dann ein genügender Abstand zum Frequenzspektrum der radialen Fehlersignale erreicht werden kann.

In der EP-A2-00 89 736 (Art. 54(3) Dokument, Veröffentlichungstag 28.09.83) ist schließlich eine Lösung vorgeschlagen worden, bei welcher mittels eines piezo-elektrischen Kristals (42) ein Phasenraster (22) derart erregt wird, daß der mittlere Haupt-Lichtfleck (36) angeblich nicht beeinflußt wird und die äußeren Hilfs-Lichtflecke (32, 40) radial und entgegengesetzt mit 20 bis 30 kHz schwingen. Die Bewegung des Phasenrasters ist hier um einen äußeren Stützpunkt (23) (Figur 1) vorgesehen. Dieser Stützpunkt (23) liegt nicht auf der Mittelachse des Phasenrasters (22) und damit nicht im Zentrum des Hauptlichtbündels. Somit ist die erreichbare Bewegung der Linie, auf der die drei Punkte liegen, zwangsläufig nicht exakt eine Drehung um den Haupt-Lichtfleck (36), vielmehr werden die Hilfslichtflecke unsymmetrisch, gegensinnig bewegt. Das heißt aber, daß der Haupt-Lichtfleck (36) nicht unbeeinflußt bleibt durch die Ansteuerung des Phasenrasters (22). Mit einer solchen Einrichtung ist deshalb nur eine Nachstellung zur Korrektur von Toleranzen möglich. Für die Verwendung in einem automatisch nachregelnden System wäre diese Einrichtung ungeeignet, da Spurverlust mit Sicherheit zu erwarten wäre.

Der Erfindung liegt daher die Aufgabe zugrunde, einen nach dem Drei-Strahl-Prinzip aufgebauten optischen Abtaster zu konstruieren, welcher auch bei radialen Schwenkarmen gut verwendbar ist und eine vorzügliche automatische Einstellung der Feinspurnachsteuerung auf die aktuelle Spurkrümmung ermöglicht.

Die Lösung dieser Aufgabe erfolgt gemäß der Erfindung durch die im Hauptanspruch aufgeführten Merkmale.

Weitere Einzelheiten und Ausgestaltungen enthalten die übrigen Ansprüche sowie die nachfolgende Beschreibung von Ausführungsbeispielen.

Nach der Erfindung wird in Verbindung mit einem radial wirkenden Spurfolgesystem ein um seinen Mittelpunkt steuerbares Phasenraster eingesetzt. Damit kann bewirkt werden, daß unerwünschte Winkelabweichungen der beiden Hilfslichtflecken gegenüber der Spurrichtung korrigiert werden. Bei Verwendung eines in das steuerbare Phasenraster eingespeisten Kontrollsignals wird erreicht, daß der Hauptlichtfleck keine Änderung seiner Position in radialer Richtung erfährt, d.h., daß das Kontrollsignal nicht den abgetasteten Informationssignalen überlagert ist. Es kann deshalb nunmehr eine beliebig hohe, geeignete Frequenz verwendet werden mit dem erwähnten Vorteil eines genügend großen Frequenzabstandes gegenüber dem tatsächlichen Radialfehlersignal. Die Steuerung des Phasenrasters geschieht mittels elektrodynamisch oder piezoelektrisch arbeitender Antriebsmittel derart, daß durch entsprechende Winkeldrehungen um den Mittelpunkt des Phasenrasters in einer Ebene senkrecht zum Lichtstrahl die beiden Hilfslichtflecken mit geringer Amplitude um den Mittelpunkt des Hauptlichtflecks schwingen. Aus der Abbildung dieser Bewegung der Hilfslichtflecken relativ zur Spur kann dann in bekannter Weise eine Spurabweichung ebenso wie eine evtl. vorliegende optische Asymmetrie in radialer Richtung detektiert und in radiale Korrektursteuersignale verwandelt werden. Mit einer Zusatzeinrichtung für die Steuerung des Phasenrasters ist es möglich im voraus bekannte Winkelabweichungen durch konstruktiv bedingte Toleranzen der Hilfslichtflecken zu berücksichtigen. Dazu wird einem üblichen D/A-Wandler, dessen Ausgangssignale die Steuergröße für die Antriebsmittel des Phasenrasters liefern, ein ROM (read only memory) vorgeschaltet.

Solche Winkelabweichungen liegen beispielsweise dann vor, wenn sich eine Abhängigkeit des Tangentenfehlwinkels vom Abtastradius aufgrund der geometrischen Konstruktionsverhältnisse ergibt und die sowohl bei der Betriebsart "normales Abtasten" wie auch bei der Betriebsart "Suchlauf" aus der Zuordnung der bekannten Winkelfehler vom Abtastradius über die auf den Platten vorliegenden Informationen der kumulierten Abspielzeit errechnet und als Adresse, z. B. bestehend aus jeweils 8 Einzelbits, für das ROM verwendet werden. Damit lassen sich Fehlabtastungen vermeiden, deren Ursache in im voraus bekannten Winkelabweichungen liegen.

Nachfolgend wird die Erfindung an hand der Zeichnung beschrieben. Sie zeigt in

Figur 1 gemäß Stand der Technik die Lage der Lichtflecken beim Drei-Strahl optischen Abtaster; .

Figur 2 gemäß Stand der Technik den schematischen Strahlengang bei diesem optischen Abtaster mit Phasenraster;

Figur 3 gemäß Stand der Technik: Verlauf der unerwünschten radialen Abweichungen $D_{1,2}$ der Hilfslichtflecken von der Spur unter Berücksichtigung eines Radialfehlwinkels $\delta$;

Figur 4 Prinzip des drehbaren Phasenrasters;

Figur 5 Prinzip der Drehung der Hilfslichtflecken um den Mittelpunkt des Hauptlichtfleckes um den Winkel $\alpha$;

Figur 6a perspektivische Darstellung eines Ausführungsbeispiel eines kompakten elektrodynamischen Antriebs für ein steuerbares Phasenraster;

Figur 6b perspektivische, auseinander gezogene Darstellung des Antriebs der Figur 6a;

Figur 7 perspektivische Darstellung eines zweiten Ausführungsbeispiels eine elektrodynamischen Antriebs für ein steuerbares Phasenraster;

Figur 8 perspektivische Darstellung eines dritten Ausführungsbeispiels mit einem piezoekektrischen Antrieb für ein steuerbaren Phasenraster;

Figur 9 Blockschaltbild für die Auswertung der Detektionssignale und die Ermittlung des Steuersignals für den Antrieb des Phasenrasters;

Figur 10 Darstellung der Detektionssignale ohne und mit Fehlwinkel $\alpha'$;

Figur 11 vereinfachtes Blockschaltbild mit einem ROM vor dem D/A-Wandler als Zusatzeinrichtung zur Steuerung vom im voraus bekannten Winkelabweichungen der Hilfslichtflecken, z. B. beim Suchlauf.

Unter Bezug auf die vorangegangenen Ausführungen zum Stand der Technik sollen mittels der Figuren 1, 2, und 3 bekannte, hier wichtige Einzelheiten besser verständlich gemacht werden.

Figur 1 zeigt einen Spurausschnitt zweier benachbarter Spuren. Die gerade vom Hauptlichtfleck H abgetastete Spur Sp2 ist hier die untere der beiden. Die Radial-Richtung senkrecht zu den Spuren ist mit RR markiert. Im Abstand a sind die beiden Hilfslichtflecken A und B vom Hauptlichtfleck H entgegengesetzt zur Spur in radialer Richtung versetzt eingezeichnet. Die eingezeichneten Größen $D_1$ und $D_2$ entstehen, z. B. durch Verdrehung des Phasenrasters Ph (Figur 2) um seinen Mittelpunkt und sind unerwünscht. Bei einer Schwenkarm-Abtastung sind sie jedoch nicht vermeidbar. Auch bei einer Radial-Linear-Abtastung treten sie durch konstruktionsbedingte Toleranzen auf. Das Phasenraster Ph kann jeweils nur für einen Spurradius optimal eingestellt werden. Wie sich das für den resultierenden Fehlwinkel δ bei verschiedenen Lichtfleck-Abständen a auswirkt, zeigt Figur 3 graphisch. Wenn z. B. ein resultierender Fehlwinkel δ von 1° vorliegt und der Hilfslichtfleck-Abstand a vom Hauptlichtfleck von 15 µm betrachtet wird, dann ergibt sich bei entsprechend unterschiedlichen Justierungsarten (bei größtem bzw. kleinstem Spurradius ein justiertes Phasenraster) bereits eine Abweichung der Hilfslichtflecken von ihrer Sollposition von etwa $D_{1,2\,MAX} = 0,14$ µm resp. 0,32 µm. Die Erfahrung zeigt, daß eine Abweichung von $D_{1,2MAX}$ von 0,1 µm als Grenze der Abtastsicherheit (strichpunktierte Linie bei $D_{1,2MAX} = 0,1$ µm) betrachtet werden muß (siehe Figur 3). In Figur 2 ist der grundsätzliche Strahlengang bei Verwendung eines Phasenrasters Ph zur Erzeugung der beiden Hilfslichtflecken A und B dargestellt. Von der Lichtquelle Q, beispielsweise einer Laser-Diode, verläuft ein Lichtbündel zum Phasenraster Ph. Dort entstehen entsprechend den Beugungserscheinungen drei Teil-Lichtbündel, die mittels Sammellinse $S_1$, über einen halbdurchlässigen Spiegel 2 zum Spiegel 1 gelenkt werden. Die dort reflektierten Strahlenbündel werden von einer weiteren Sammellinse $S_2$ jeweils fokussiert in der Ebene der Reflektionsschicht R und ergeben die Lichtflecken A, H und B. Die reflektierten Lichtbündel dieser Lichtflecken gelangen auf dem gleichen Weg zurück zum halbdurchlässigen Spiegel 2, der sie zu den Detektionselementen für diese Lichtstrahlenbündel Det.H, Det.A und Det.B reflektiert.

Zusammenfassend kann zum Stand der Technik, wie ihn diese drei Figuren wiedergeben, gesagt werden, daß die in Figur 3 eingezeichnete Grenze der Abtastsichheit bei D = 0,1 µm liegt, wobei D die radiale Abweichung des Hilfslichtflecks von der Sollposition auf der Spur ist. Das bedeutet, daß D < 0,1 µm eingehalten werden muß, andernfalls tritt bereits eine Störung des Abtastvorgangs ein. Dies gilt grundsätzlich sowohl bei Radial-Linear-Abtastung wie auch bei Schwenkarmabtastung . Der Fehlwinkel δ (Figur 3) entsteht durch die Summe der Toleranzen eines der genannten Abtastsysteme. Beim Schwenkarmabtaster kommt noch ein verhältnismäßig großer, konstruktionsbedingter Tangentenfehlwinkel dazu, der auch bei optimler Einjustierung des Phasenrasters Ph beispielsweise bei kleinstem Spurradius dazu führt, daß eine einwandfreie Abtastung im äußeren Abtastbereich der Spuren nicht mehr gewährleistet ist.

In Figur 4 wird der wesentliche Erfindungsgedanke schematisch dargestellt. Das von einer Lichtquelle Q, beispielsweise einer Laser-Diode, ausgehende Lichtbündel O gelangt auf die Phasenrasterscheibe Ph im Zentrum Z. Dort entstehen drei Lichtbündel aufgrund der Beugungserscheinungen und zwar in einer Ebene. Die drei Lichtbündel landen in dieser Konfiguration auf dem abzutastenden scheibenförmigen Informationsträger. Die drei entstehenden Lichtflecken liegen mit ihren Mittelpunkten auf einer Geraden. Es sind die Hilfslichtflecken A und B sowie der Hauptlichtfleck H. Eine Drehung des Phasenrasters Ph um einen Winkel α um sein Zentrum Z bewirkt eine Winkelabweichung α' dieser Geraden zur Spurrichtung Sp.

Die richtige Lage der Lichtflecken zur Informationsspur zeigt Figur 5. Eine unerwünschte Abweichung in radialer Richtung um den Betrag D entsprechend der Vergrößerung der Winkelabweichung α' ist erkennbar. Nach der Erfindung ist es nunmehr möglich den Betrag D der Abweichung zu detektieren und das Phasenraster durch eine entsprechende Drehung mittels eines Antriebsmittels, das von einer aus der Detektion gebildeten Steuergröße angetrieben wird, so um sein Zentrum Z um den Winkel α zu verstellen, daß die Winkelabweichung und damit der Betrag D der Abweichung zu Null geregelt wird. Dabei bleibt der Hauptlichtfleck H stationär auf der Informationsspur.

Somit ist es möglich, die eingangs erwähnte Verbesserung der Nachführeigenschaften durch Anlegen eines Kontrollsignals an das radial wirkende Spur-Nachfolgesystem anzuwenden. Es ist dabei möglich eine wesentlich höhere Frequenz als 500 bis 600 Hz zu verwenden, nämlich beispielsweise 10 kHz, da keine Überlagerung des Kontrollsignals mit den abgetasteten Informationssignalen möglich ist.

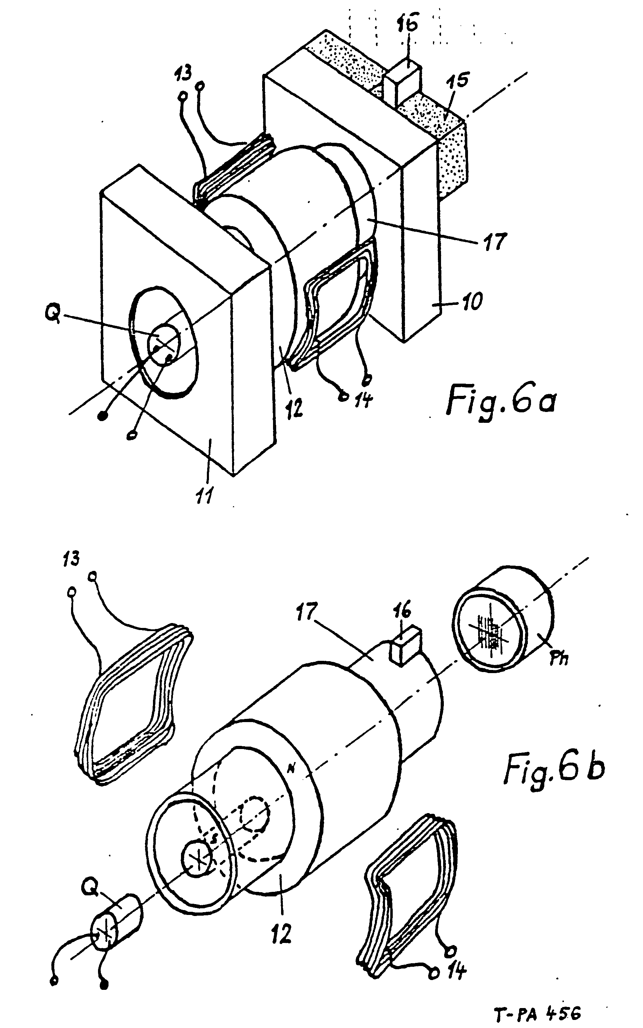

Ein erfindungsgemäßes Ausführungsbeispiel eines Antriebsmittels für das Phasenraster Ph zeigen die Figuren 6a und 6b. Zwischen zwei gehäusefesten Lagern 10, 11 ist die Phasenrasterscheibe Ph drehbar gelagert. Sie ist in einem radial magnetisierten, zwischen den Lagern 10, 11 drehbaren Magnetring 12 befestigt, der von zwei gehäusefesten Spulen 13, 14 über Luftspalte durch induktive Wirkung auf die Pole desselben angetrieben bzw. gesteuert wird. Die an den Spulen 13, 14 liegende Steuerspannung, die sich aus dem Kontrollsignal und der aus den Detektionsmitteln hergeleiteten Steuergröße zusammensetzt, bewirkt ein Drehmoment, wodurch der Magnetring 12 samt Phasenraster Ph entsprechend bewegt wird. Eine Elastizität 15, die an einem Lager befestigt ist, arbeitet mit einem Tubusansatz 16 zusammen, indem diese sowohl als rückstellende Kraft wie auch als Dämpfung arbeitet. Innerhalb des Tubus, der den Magnetring 12 trägt und zentrisch in seinem einen Ende des Phasenrasters Ph aufweist, ist nahe dem anderen Ende zentrisch die Lichtquelle Q, beispielsweise ein Halbleiter-Laser, befestigt.

Wie bereits erwähnt wird das Antriebsmittel für das Phasenraster mit einem überlagerten Kontrollsignal von beispielsweise 10 kHz erregt und zwar derart, daß die beiden Hilfslichtflecke A und B mit einer radialen Abweichung von beispielsweise D = 0,05 µm um ihren "Drehpunkt", das ist das Zentrum des Hauptlichtflecks H schwingen.

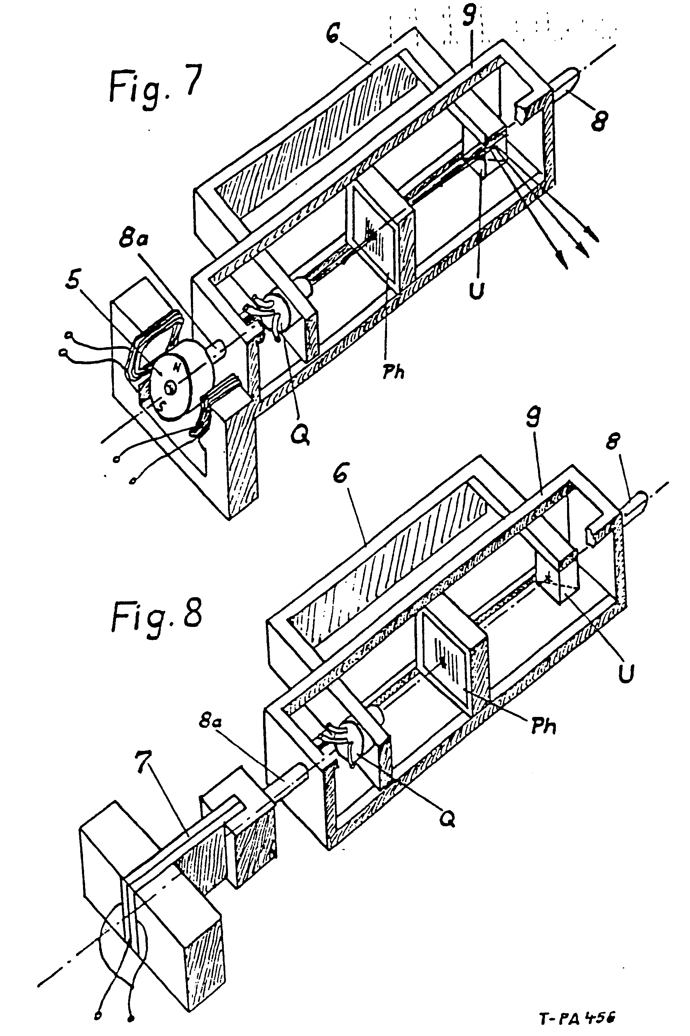

In den Figuren 7 und 8 sind zwei andere Ausführungsbeispiele für das Antriebsmittel perspektivisch und teilweise aufgeschnitten dargestellt. Figur 7 zeigt einen elektrodynamischen Antrieb 5 für das Phasenraster Ph und achsnaher Lagerung. Die Lichtquelle Q und ein Umlenkspiegel U, der je nach übriger Kontruktion des optischen Abtasters auch als teildurchlässiger Strahlenteiler ausgeführt sein kann, wobei dann ähnlich Figur 2 das reflektierte Licht vom ausgesendeten Licht getrennt wird, befinden sich vor und hinter dem Phasenraster Ph an einer ortsfesten Halterung 6 innerhalb der angetriebenen Schwenkeinrichtung mit dem Rahmen 9. Die beidseitigen Achsen 8 und 8a sind auf nicht eingezeichnete Weise drehbeweglich gelagert. Figur 8 zeigt einen ähnlichen Aufbau und entsprechende Darstellung mit einem piezoelektrischen Torsionswandler 7 als Antriebsmittel.

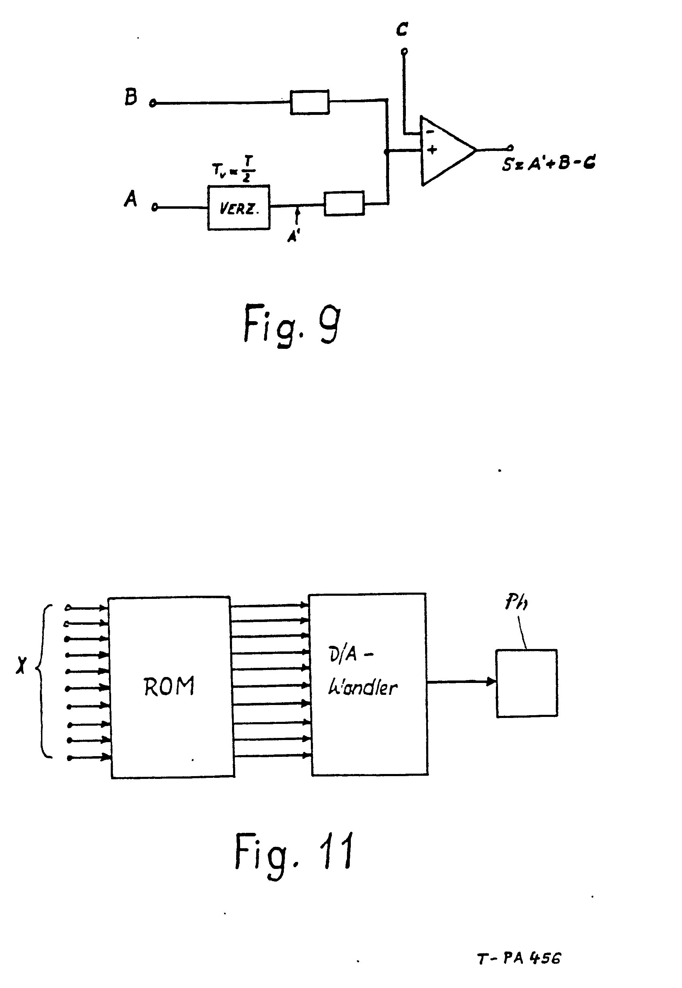

Das Blockschaltbild der Figur 9 zeigt vereinfacht, wie die Detektionssignale A und B ausgewertet werden und daraus das Steuersignals S für den Antrieb des Phasenrasters ermittelt wird. Am Minus-Eingang des Differenzverstärkers liegt ein Referenzsignal

$$C = \frac{A_0 + B_0}{2}$$

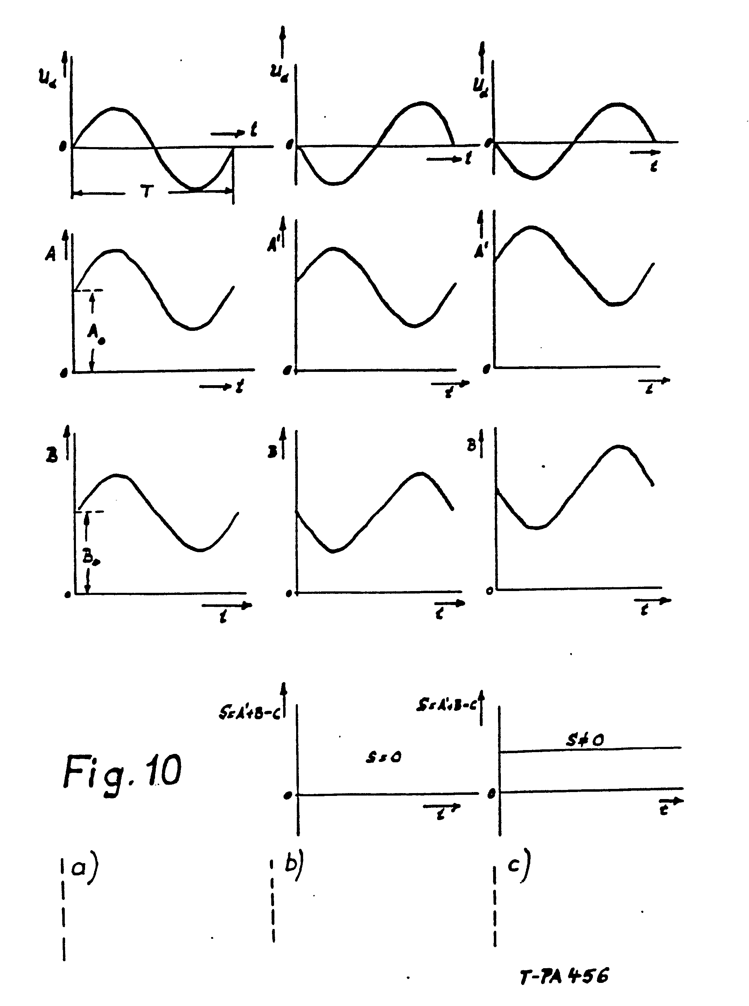

In Figur 10 ist graphisch dargestellt, wie das Kontrollsignal $U\alpha$ in Abhängigkeit von der zeit t über eine Periode T verläuft und darunter der entsprechende zeitliche Verlauf der Detektionssignale A und B ohne Fehlwinkel $\alpha'$, wobei die Detektionselemente nicht dargestellt sind. (Fig. 10a).

Auf den beiden Detektionselementen erscheint das Kontrollsignal in gleicher Phase zueinander. Das im Detektionselement A entstehende Signal wird um die halbe Periode des Kontrollsignals $U\alpha$ verzögert und zu dem im Detektionselement B entstehende Signal addiert sowie anschließend in einem Differenzverstärker von einer Referenzspannung C subtrahiert.

Bei richtiger Lage der Hilfslichtflecken A und B zur Spur um mit $C = \frac{A_0 + B_0}{2}$ ist das Summensignal S = O (Fig. 10b). Eine Winkelverdrehung bewirkt nun eine Verschiebung der Signale der Detektionselemente jeweils in positive oder negative Richtung. Durch die Verzögerung des Detektionssignals A' ist dann die Summenspannung nicht mehr Null (Fig. 10c), sondern je nach Richtung der Winkelabweichung positiver oder negativer. Das Summensignal enthält keine Komponenten des Radialfehlersignals, da ja die Summe der radialen Anteile der erfaßten Lichtintensität durch die Detektionselemente bei einer Spurverschiebung in radialer Richtung weg von den Hilfslichtflecken Null ist. Das Summensignal kann also hinsichtlich Betrag und Richtung als Steuersignal S für die Phasenraster-Steuereinrichtung, den Antriebsmittel für das Phasenraster Ph, verwendet werden.

Wenn gleichzeitig eine Asymmetrie des optischen Abtasters vorliegen sollte und zwar derart, daß z. B. durch Verschmutzung Unterschiede in den beiden Detektionskanälen auftreten, kann dies mit dem Kontrollsignal als Winkeldrehung wie zuvor beschrieben in gleicher Weise benutzt werden. Dabei tritt wie bereits erwähnt gegenüber bekannten Lösungen, die ein Kontrollsignal niedriger Frequenz verwenden, der wichtige Vorteil in Erscheinung, daß das Kontrollsignal nicht auf den Hauptlichfleck einwirkt und damit keine Überlagerung mit den Informationssignalen, die vom Hauptlichfleck abgetastet werden, auftreten kann. Diese Trennung von Kontrollsignal und Informationssignal erlaubt außerdem die vorteilhafte Wahl der höheren Frequenz des aufgeprägten Kontrollsignals. Abschließend zeigt Figur 11 ein einfaches Blockschaltbild für eine Zusatzeinrichtung. Sie erlaubt, im voraus bekannte Winkelabweichungen der Hilfslichtflecken zu berücksichtigen, indem dem üblichen D/A-Wandler, der das Steuersignal für das Phasenraster Ph abgibt, ein ROM vorgeschaltet ist. Er ist über seine Eingänge mit Größen X belegt, die die ROM-Adresse ist, welche sich aus der Berechnung der "Sprung-Adresse" ergibt.

Im voraus bekannte Winkelabweichungen liegen z. B. dann vor, wenn sich eine Abhängigkeit des Tangentenfehlwinkels vom Abtastradius aufgrund der geometrischen Konstruktionsverhältnisse ergibt und die sowohl bei normalem Abtasten wie auch bei der Betriebsart "Suchlauf" aus der "Sprungweite" z. B. in Form von zu überspringenden Spuren jeweils errechnet wird, wobei die Zahl der zu überspringenden Spuren unter Berücksichtigung der bereits abgetasteten Spuren, bestehend aus beispielsweise acht Einzelbits, als Adresse für das ROM verwendet werden. Bei den bereits abgetasteten oder absolvierten Spuren handelt es sich um die Anzahl von Spuren, die von Anfang des Spurenbereichs der Platte an bis zum momentanen Abtastpunkt in radialer Richtung bestimmt werden. Die Bestimmung dieser Zahl wird bei derzeit bekannten Abspielgeräten aus der kumulierten Zeit errechnet und liegt damit bereits vor.

Der Vorteil dieser Zusatzeinrichtung besteht in der Vermeidung einer Fehlabtastung. Es könnte ohne Steuerung der im voraus bekannten Winkelabweichungen bei extrem größen Tangentenfehlwinkeln eine unerwünschte "Einrastung" des radialen Servokreises über die beiden Hilfslichtflecken auf die dem Hauptlichtfleck benachbarten Spuren erfolgen. Das läßt sich hiermit eindeutig vermeiden.

**Patentansprüche**

1. Radial wirkendes Spurfolgesystem mit einem optischen Abtaster für ein Audio- oder Video-Plattenwiedergabegerät, das mittels eines beweglichen Phasenrasters (Ph) drei auf einer Linie liegende Lichtflecken erzeugt, die zur Tangente an der Spurabtaststelle einstellbar sind, wobei das Phasenraster (Ph) mittels eines elektrischen Antriebsmittels von einem über 600 Hz liegenden Kontrollsignal derart um seine Mittelachse schwingend erregt wird, daß der mittlere Lichtfleck (H) nicht beeinflußt wird und die äußeren Lichtflecken (A, B) radial und entgegengesetzt schwingen, wobei der mittlere Lichtfleck (H) nach Reflexion gemäß der Spurinformation mittels eines Detektionsmittels und anschließender elektronischer Verarbeitung das Nutzsignal und gegebenenfalls das Fokusnachsteuersignal liefert, während die reflektierten Bündel der Lichtflecken (A, B), die in etwa in Spurrichtung in gleichem Abstand zum mittleren Lichtfleck (H) radial entgegengesetzt zueinander ungleiche Beträge versetzt auftreffen, getrennten Detektionsmitteln zugeleitet werden, die Regelsignale für das radiale Spurfolgesystem liefern, und wobei das Phasenraster (Ph) so angesteuert wird, daß die mittlere Winkellage der Linie durch die drei Lichtflecken (A, H, B) auf eine Vorzugslage geregelt wird, indem ein geschlossener Regelkreis vorgesehen ist, der ständig und automatisch mittels eines während der Abtastung aus der mittleren Ist-Lage der durch die Lichtflecken (A, H, B) gehenden Linie abgeleiteten Steuersignals die mittlere Winkellage dieser Linie auf eine vorgegebene Soll-Lage regelt.

2. Radial wirkendes Spurfolgesystem nach Anspruch 1, wobei das Phasenraster (Ph) als Scheibe ausgebildet ist und diese in einem radial magnetisierten Magnet-Ring (12) befestigt ist, der zwischen zwei gehäusefesten Lagern (10, 11) drehsteuerbar gelagert ist, indem zwei gehäusefeste Spulen (13, 14) über Luftspalte bei entsprechender Ansteuerung ein Drehmoment auf das drehbare Teil wirken lassen.

3. Radial wirkendes Spurfolgesystem gemäß Anspruch 1, wobei das Phasenraster (Ph) als Scheibe ausgebildet ist, die in einem Rahmen (9) befestigt ist, der drehbeweglich in Achsnähe gelagert ist und dessen eine herausstehende Lagerachse (8a) entweder mit einem Ende eines piezo-elektrischen Torsionsbiegers (7) oder mit einem elektrodynamischen Antrieb (5) in Wirkverbindung steht, dessen andere Lagerachse (8) eine drehbewegliche Halterung besitzt, und daß nach dem Phasenraster (Ph) ein Umlenkspiegel oder ein halbdurchlässiger Strahlenteiler (U) sowie vor dem Phasenraster (Ph) eine Laserquelle (Q) ebenfalls gehäusefest angeordnet sind.

4. Radial wirkendes Spurfolgesystem nach Anspruch 2, oder Anspruch 3, wobei zwischen dem drehbaren Teil (16) der Phasenraster-Einrichtung und dem Gehäuse (10) ein an sich bekanntes Elastizitätselement (15) vorgesehen ist, das so ausgebildet ist, daß es sowohl als radial rückstellende Kraft als auch als Dämpfung arbeitet.

5. Radial wirkendes Spurfolgesystem nach Anspruch 2, wobei das Phasenraster (Ph) in dem einen Ende eines Tubus (17) befestigt ist, der etwa mittig den Magnet-Ring (12) trägt, und wobei das andere Ende des Tubus eine Laser-Diode (Q) als Lichtquelle enthält.

6. Radial wirkendes Spurfolgesystem nach Anspruch 1, sowie einem oder mehreren der übrigen Ansprüche, wobei die der Spurfolgeregelung zugeordneten Lichtflecken (A, B) mit ersten und zweiten Detektionselementen (Det.A und Det.B) zusammenarbeiten, wobei die von dem ersten Detektionselement (Det.A) erzeugten Signale mit elektronischen Mitteln um die halbe Periode des Kontrollsignals verzögert (Signal A') und zu dem Signal des zweiten Detektionselementes (Det.B) addiert werden, so daß sich bei optimaler Lage der beiden Hilfsflecken zur abzutastenden Spur ein Summensignal (S) von 50 % des maximal möglichen Summensignals ergibt, während eine Winkelverdrehung eine Verschiebung der Kontrollsignale jeweils in der positiven oder negativen Bereich ergibt, und wobei mit dem so ermittelten Signal das Phasenraster (Ph) gesteuert wird.

7. Radial wirkendes Spurfolgesystem nach Anspruch 1, wobei abtastfehlertypische oder proportionale Winkelabweichungen bei bestimmten Abtastradien für ein bestimmtes Plattenspielerlaufwerk in einem Festwertspeicher (ROM) abgespeichert sind und wobei dieser Festwertspeicher (ROM) einem üblichen Digital/Analog-Wandler vorgeschaltet ist, dessen Ausgangssignal die Steuergröße für das steuerbare Phasenraster (Ph) ist, wobei sowohl für den normalen Abtastvorgang als auch für die Betriebsart Suchlauf aus der als Information auf der Platte vorliegenden kumulierten Zeit in bekannter Weise binäre Signalfolgen errechnet und beispielsweise aus acht Bits bestehende Blöcke als Adresse für den Festwertspeicher (ROM) verwendet werden.

**Claims**

1. A radially acting track-following system with an optical scanner for an audio or video disc reproduction unit which produces, by means of a moveble phase grating (Ph), three luminous spots lying on a line which are adjustable in relation to the tangent to the track scanning point, the phase grating (Ph) being excited to oscillate about its central axis by means of an electrical drive means by a control signal above 600 Hz in such a manner that the central luminous spot (H) is not influenced and the outer luminous spots (A, B) oscillate radially and oppositely, wherein the central luminous spot (H), after reflection, supplies the useful signal and possibly the focus follow-up signal in accordance with the track information, by means of a detection means and subsequent electronic processing, while the reflected beams of luminous spots (A, B), which impinge, offset by unequal amounts substantially in the track direction, and radially opposite to one anothes with the same spacing from the central luminous spot (H), are supplied to separate detection means which deliver control signals for the radial trackfollowing system, and wherein the phase grating (Ph) is actuated so that the average angular position of the line through the three luminous spots (A, H, B) is adjusted to a preferred position, a closed control loop being provided which continuously and automatically adjusts the average angular position of the line passing through the luminous spots (A, H, B) to a preset desired position by means of a control signal derived, during the scanning, from the average actual position of this line.

2. A radially acting track-following system as claimed in Claim 1, wherein the phase grating (Ph) is constructed in the form of a disc and this is secured in a radially magnetized magnetic ring (12) which is mounted between two bearings (10, 11) fixed to the housing for rotary control, two coils (13, 14) fixed to the housing allowing a torque to act on the rotatable part through air gaps on appropriate actuation.

3. A radially acting track-following system as claimed in Claim 1, wherein the phase grating (Ph) is constructed in the form of a disc which is secured in a frame (9) which is mounted in the vicinity of the axis for rotary movement and of which one projecting bearing spindle (8a) is in operational communication either with one end of a piezo-electric torsion bender (7) or with an electro-dynamic drive (5), while its other bearing spindle (8) has a rotationally movable holding means, and that there are disposed after the phase grating (Ph), likewise fixed to the housing, a reflecting mirror or a partially transmitting beam splitter (U) and before the phase grating (Ph) a laser source (Q).

4. A radially acting track-following system as claimed in Claim 2 or Claim 3, wherein provided between the rotatable part (16) of the phase grating device and the housing (10) is an elasticity element (15) known per se which is so constructed that it works both as a radial restoring force and as damping.

5. A radially acting track-following system as claimed in Claim 2, wherein the phase grating (Ph) is secured in one end of a tube (17) which carries the magnet ring (12) substantially in the middle and wherein the other end of the tube contains a laser diode (Q) as a light source.

6. A radially acting track-following system as claimed in Claim 1 and one or more of the other Claims, wherein the luminous spots (A, B) associated with the track-following control, cooperate with first and second detection elements (Det.A and Det.B), wherein the signals generated by the first detection element (Det.A) are delayed by electronic means by the halfperiod of the control signal (Signal A') and are added to the signal of the second detection element (Det.B), so that, when the two auxiliary spots are in the optimum position in relation to the track to be scanned, a sum signal (S) of 50 % of the maximum possible sum signal results, while an angular turning results in a displacement of the control signals into the positive or negative range, and wherein the phase grating (Ph) is controlled by the signal thus obtained.

7. A radially acting track-following system as claimed in Claim 1, wherein angular deviations which are typical of or proportional to scanning errors with certain scanning radii for a specific disc-player drive mechanism, are stored in a read-only memory (ROM) and wherein this read-only memory (ROM) is followed by a conventional digital/analogue converter, the output signal of which is the controlling quantity for the controllable phase grating (Ph), binary signal sequences being calculated, in known manner, from the cumulative time present as information on the disc, both for the normal scanning operation and for the search mode of operation and blocks consisting of eight hits for example are used as addresses for the readonly memory (ROM).

**Revendications**

1. Système de suivi de piste opérant radialement, comportant un analyseur optique pour un appareil de reproduction de disques audio ou vidéo, qui produit au moyen d'un réseau de phasage mobile (Ph) trois spots lumineux places sur une ligne et qui sont réglables par rapport à une tangente à l'endroit d'analyse de piste, le réseau de phasage (Ph) étant actionné à l'aide d'un moyen électrique d'entraînement et par un signal de contrôle d'une fréquence supérieure à 600 Hz de façon à osciller autour de son axe central de telle sorte que le spot lumineux central (H) ne soit pas influencé et que les spots lumineux extérieurs (A, B) oscillent radialement et dans des directions opposées, de telle sorte que le spot lumineux central (H), produise, après une réflexion correspondant à l'information de piste à l'aide d'un moyen de détection et par traitement électronique ultérieur, le signal utile et le cas échéant le signal de commande de correction de focalisation, tandis que les faisceaux réfléchis correspondant aux spots lumineux (A, B), qui arrivent à peu près dans la direction de la piste et à la même distance par rapport au spot lumineux central (H) sont décalés radialement l'un par rapport à l'autre de distances inégales de façon à parvenir sur des moyens de détection séparés, qui produisent des signaux de régulation du système de suivi radial de piste, et en outre le réseau de phasage (Ph) est commandé de telle sorte que la position angulaire moyenne de la ligne passant par les trois spots lumineux (A, H, B) soit réglée sur une position de référence par le fait qu'il est prévu un circuit de régulation fermé, qui règle constamment et automatiquement, au moyen d'un signal de commande dérivé pendant l'analyse de la position réelle moyenne de la ligne passant par les spots lumineux (A, H, B), la position angulaire moyenne de cette ligne sur une position de consigne prédéterminée.

2. Système de suivi de piste opérant radialement selon la revendication 1, dans lequel le réseau de phasage (Ph) est agencé comme un disque et celui-ci est fixé dans un anneau magnétique (12) magnétisé radialement, qui est monté de façon tournante entre deux paliers (10 11) solidaires du carter, de telle sorte que deux bobines (13, 14) fixées sur le carter puissent exercer un couple sur la partie tournante par l'intermédiaire d'entrefers et dans le cas d'une excitation correspondante.

3. Système de suivi de piste opérant radialement selon la revendication 1, dans lequel le réseau de phasage (Ph) est agencé comme un disque qui est fixé dans un chassis (9), qui est monté de façon tournante à proximité de l'axe et dont un axe de palier (8a) placé en saillie coopère soit avec une extrémité d'un dispositif de flexion-torsion piézoélectrique (7) soit avec un entraînement électro-dynamique (5), dont l'autre axe de palier (8) comporte un support mobile en rotation, et en outre il est prévu, après le réseau de phasage (Ph), un miroir de renvoi ou bien un diviseur de rayonnement semi-transparent (U) et également, avant le réseau de phasage (Ph), une source de laser (Q) également solidaire du carter.

4. Système de suivi de piste opérant radialement selon la revendication 2 ou la revendication 3, dans lequel il est prévu entre la partie tournante (16) du dispositif à réseau de phasage et le carter (10) un élément élastique (15) connu en soi, qui est agencé de telle sorte qu'il produise aussi bien une force de rappel radiale qu'une force d'amortissement.

5. Système de suivi de piste opérant radialement selon la revendication 2, caractérisé en ce que le réseau de phasage (Ph) est fixé dans une extrémité d'un tube (17), qui supporte à peu près au milieu l'anneau magnétique (12) tandis que l'autre extrémité du tube contient une diode-laser (Q) servant de source lumineuse.

6. Système de suivi de piste opérant radialement selon la revendication 1, également selon une ou plusieurs des autres revendications, dans lequel les spots lumineux (A, B) assurant la régulation du suivi de piste coopèrent avec un premier et un second élément de détection (Det.A et Det.B ), auquel cas les signaux produits par le premier élément de détection (Det. A) sont retardés à l'aide de moyens électroniques de la demi-période du signal de contrôle (signal A') et sont additionnés avec le signal du second élément de détection (Det. B) de telle sorte que, pour une position optimale des deux spots auxiliaires par rapport à la piste à analyser, on obtienne un signal de sommation (S) correspondant à 50 % du signal de sommation maximal possible alors que, pendant une rotation angulaire, il se produit un déplacement du signal de contrôle respectivement dans le domaine positif ou le domaine négatif, et auquel cas le réseau de phasage (Ph) est commandé par le signal ainsi obtenu.

7. Système de suivi de piste opérant radialement selon la revendication 1, dans lequel des écarts angulaires correspondant typiquement ou proportionnels à des erreurs d'analyse sont mémorisés, pour des rayons déterminés d'analyse et pour un agencement déterminé de l'appareil à disques, dans une mémoire morte (ROM), et dans lequel il est prévu en série avec cette mémoire morte (ROM) un convertisseur numérique/analogique classique dont le signal de sortie représente la grandeur de commande du réseau de phasage (Ph) pouvant être commandée, auquel cas aussi bien pour le processus normal d'analyse que pour le mode opératoire de recherche, des séquences de signaux binaires sont calculées d'une manière connue à partir du temps cumulé se trouvant comme information sur le disque et par exemple des blocs se composant de huit bits sont utilisés comme aadresses pour la mémoire morte (ROM).

Fig. 1
STAND DER TECHNIK

Fig. 2

STAND DER
TECHNIK

Fig. 3
STAND DER
TECHNIK

T-PA 456

Fig. 4

Fig. 5

Fig.6a

Fig.6b

T-PA 456

0 129 760

Fig. 7

Fig. 8

T-PA 456

$$S \approx A' + B - C$$

$$T_v = \frac{T}{2}$$

Fig. 9

Fig. 11

T- PA 456

9

Fig. 10

a)    b)    c)

T-PA 456